(19) Europäisches Patentamt
European Patent Office
Office européen des brevets

(11) **EP 4 596 229 A1**

(12) **EUROPEAN PATENT APPLICATION**

(43) Date of publication:
**06.08.2025 Bulletin 2025/32**

(21) Application number: **25160742.0**

(22) Date of filing: **14.12.2018**

(51) International Patent Classification (IPC):
**B32B 3/26** *(2006.01)*    **B32B 5/26** *(2006.01)*
**B32B 5/32** *(2006.01)*    **B32B 27/06** *(2006.01)*
**B32B 27/08** *(2006.01)*    **B32B 27/32** *(2006.01)*
**A01G 9/14** *(2006.01)*

(52) Cooperative Patent Classification (CPC):
**B32B 3/26; A01G 9/1415; A01G 13/24;
A01G 13/33; B32B 3/266; B32B 5/26; B32B 5/32;
B32B 27/065; B32B 27/08; B32B 27/32;
B32B 27/327;** B32B 2250/02; B32B 2250/03;
B32B 2250/04; B32B 2250/05;         (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.12.2017 CN 201711345463**

(62) Document number(s) of the earlier application(s) in
accordance with Art. 76 EPC:
**18825961.8 / 3 723 974**

(71) Applicants:
• **Abu Dhabi Polymers Co. Ltd (Borouge) - Sole
Proprietorship L.L.C.
Abu Dhabi (AE)**

• **Borealis GmbH
1020 Vienna (AT)**

(72) Inventors:
• **DUAN, Xinrong
Shanghai, 201203 (CN)**
• **ZHOU, Xin
Shanghai, 201203 (CN)**

(74) Representative: **Dehns
10 Old Bailey
London EC4M 7NG (GB)**

Remarks:
This application was filed on 27-02-2025 as a
divisional application to the application mentioned
under INID code 62.

(54) **FOAMED POLYETHYLENE FILM**

(57)    A multilayer film or sheet having a surface area
of at least 10 m², comprising
a layer (A) and a layer (B);
wherein layer (A) is not foamed and comprises at least
one multimodal linear low density polyethylene having a
density of 905 to 935 kg/m³; and
wherein layer (B) is foamed and wherein the foamed layer
(B) comprises at least 45 wt% of at least one multimodal
polyethylene having a density of 905 to 945 kg/m³ and
optionally 10 to 50 wt% of a low density polyethylene
(LDPE).

EP 4 596 229 A1

(52) Cooperative Patent Classification (CPC): (Cont.)
B32B 2250/242; B32B 2250/40; B32B 2250/44;
B32B 2266/025; B32B 2270/00; B32B 2307/304;
B32B 2307/40; B32B 2307/408; B32B 2307/414;
B32B 2307/712; B32B 2410/00; Y02A 40/25

## Description

This invention relates to a foamed polyethylene film or sheet or an article comprising such a film or sheet. In particular, the invention relates to a multilayer film comprising a non-foamed layer comprising a multimodal LLDPE and a foamed layer comprising at least one multimodal polyethylene, optionally in combination with a low density polyethylene (LDPE). The use of this layer combination leads to a foamed film with desirable properties, in particular in terms of light scattering and hence applications in the agricultural industry.

## Background

Foaming is a known technology which was firstly implemented in moulding where the thickness of the objects is sufficiently high to allow foaming to occur. Foaming is an interesting alternative for the polymer manufacturer as foamed articles can enable a cost reduction, weight reduction, insulation improvement, shorter injection cycles and other advantages.

Polyethylene foam can be prepared by extruding a molten polyethylene together with a foaming agent. The foaming agent can be either a gas or a product that will decompose at a given temperature and release a gas. At a high enough temperature and under pressure, the foaming agent will dissolve in the melted polymer and disperse. At the exit of the die, when the pressure drops, the incompatibility of the gas in the polymer will create bubbles that are called cells. As the polymer cools down to its solid phase, the growth of the cells is limited.

During foaming, cells originate and grow to a size determined by the equilibrium of pressure of the propellant versus the containing melt strength of the polymer, thus forming a cellular polymeric structure.

Foaming has also been used in the manufacture polyolefin films. This allows a reduction in the density of the film and therefore allows the use of less plastic for a given packaging solution. Foaming is, however, more challenging in the context of film preparation than moulding as there is no mould to contain the extruded melt and assure a smooth surface. The use of a mould helps keep a smooth article surface despite the presence of bubbles in the polymer.

A further issue with foamed films and sheets is that smaller thicknesses compared to moulding leads to a serious drop in mechanical properties. Processability is also challenging. Conventional foamed films often do not have sufficiently good properties to find their place on the market.

The present inventors have now appreciated however, that foamed polyethylene films may have applications in the agricultural industry as greenhouse films or in mulching.

Polyethylene films are often used in "poly tunnels" to enable the growth of crops. A polytunnel (also known as a polyhouse, hoop greenhouse or hoophouse, grow tunnel or high tunnel) is a tunnel typically formed from a support structure covered in polyethylene film, often semi-circular in shape. The interior heats up because incoming solar radiation from the sun warms plants and soil inside the tunnel faster than heat can escape the structure. Air warmed by the heat from hot interior surfaces of the polytunnel is retained in the building by the roof and wall.

Polytunnels are mainly used in temperate regions in similar ways to glass greenhouses. These greenhouse like constructions can be seen on agricultural land across the temperate regions of the world. Yearly greenhouse film consumption volume is more than 120 million tons.

An important feature of the films that are used in these tunnels is their haze. A hazy film is able to diffuse light and protect the growing crops from harmful direct rays from the sun. Mineral fillers have often been added into these films to enable light diffusion. Alternatively, the polyethylene film surface is coated with paint to increase light diffusion. In cold winters, ethylene vinyl acetate (EVA) is often used as an additional film layer to provide thermal stability to the greenhouse film. This prevents damage to the film by cold overnight temperatures.

In WO2008/104370, bimodal polyethylene is used in a monofilm construction or as the outer skin layer of a multilayer film for its light scattering function. There are however problems with current polytunnel solutions. Adding mineral fillers to the film or providing films with a surface coating will lower the total light transmission (rather than just diffuse it) and also reduces the mechanical strength of the film.

There also remain issues with the thermal stability of greenhouse films. Whilst EVA is a solution, it is an expensive material which limits its attractiveness for use in large volume greenhouse or mulching films.

## Summary of Invention

The present inventors have now found that multilayer films in which a film layer is foamed offer an ideal solution to the problems above. In particular, a film having at least two layers in which one layer is foamed and the other is not foamed offers an ideal solution. A first non-foamed layer is based on a multimodal LLDPE and offers an initial degree of light scattering. This layer is combined with a foamed layer which is based on a multimodal polyethylene, optionally in combination with LDPE. This foamed layer offers additional light scattering and offers thermal stability to the film. Overall therefore, the film has high light scattering, high light transmission, good thermal stability but is still of low cost and environmentally friendly. The films also have good mechanical properties.

This film structure is useful in greenhouse applications and for mulching. The film can be placed on the ground to prevent weed growth in the area covered. It is also prevents evaporation of water and therefore keeps water at the plant roots underneath the mulching film. However, the film still allows crops planted underneath the film to grow, e.g. through holes in the film.

The preferred layer combination enables the preparation of films with a haze as high as 95% (and hence excellent light scattering) but without a serious reduction in actual light transmission (e.g. at least 80% light transmission). The foamed layer in the film provides thermal stability to the film and hence allows EVA to be avoided or at least reduced in content. The avoidance or reduction of EVA also reduces costs. Low cost is also a result of the foaming process itself as more film can be prepared from a smaller amount of raw material. Less raw material also leads to a reduced carbon footprint and a more environmental solution for the industry.

Without wishing to be limited by theory, the use of a multimodal polyethylene and optional LDPE in the foamed film provides melt strength and stretchability to the foamed layer so that the composition can be foamed without breaks. The polymer composition for foaming allows the formation of cells with even structure and the foamed sheets and films of the invention have sufficient mechanical properties for the target end use. Moreover, the processability of the polymer composition of use in the manufacture of the films of the invention is excellent during the foaming process.

Whilst the examples concentrate on the use of chemical foaming agents it is envisaged that the results will extend to other foaming technologies such as physical foaming (with gaseous foaming agents).

Viewed from one aspect the invention provides a multilayer film or sheet comprising at least a layer (A) and a layer (B);

wherein layer (A) is not foamed and comprises a multimodal linear low density polyethylene (a) having a density of 905 to 935 kg/m$^3$; and

wherein layer (B) is foamed and wherein the foamed layer (B) comprises at least 45 wt% of at least one multimodal polyethylene having a density of 905 to 945 kg/m$^3$ and optionally 10 to 50 wt% of a low density polyethylene (LDPE) based on the weight of foamed layer (B). Optional additives may also be present in any layer in an amount of 0 to 10 wt% of the layer.

In a most preferred embodiment, the invention relates to a multilayer film or sheet comprising a layer (A) and a layer (B);

wherein layer (A) is not foamed and comprises a multimodal LLDPE (a) having a density of 915 to 930 kg/m$^3$; and wherein layer (B) is foamed and wherein the foamed layer (B) comprises at least 45 wt% of at least one multimodal polyethylene having a density of 925 to 945 kg/m$^3$ and optionally 10 to 50 wt% of a low density polyethylene (LDPE). Optional additives may also be present in any layer such as in an amount of 0 to 10 wt% of the layer.

In any embodiment of the invention the multimodal polyethylene of layer (B) or the multimodal LLDPE of layer (A) preferably has an NWR$_{21/}$ MFR$_2$ of 50 to 200 and/or a Mw/Mn of at least 10.

In a preferred embodiment of the invention, the multimodal polyethylene of layer (B) is a multimodal LLDPE (b) or a multimodal MDPE.

It is preferred if any film of sheet of the invention is provided on a spool. It is preferred if film/sheet is dispensed from such a spool and covers a surface area of at least 10 m$^2$.

It is preferred that the at least one multimodal polyethylene and optional LDPE are the sole polymeric components present in the (B) layer of the films/sheets of the invention.

Optionally, and preferably, the foamed layer may comprise additives, typically conventional additives, used in conventional amounts. Additives may form 0 to 10 wt% of the foamed layer, such as 0 to 5 wt%, preferably 0.01 to 5 wt%. Some of the optional additives may be in form of well-known masterbatches and may be carried on a polymeric carrier. Any polymer carrier is excluded from the above definition polymeric components, but forms part of the additive package. Thus any optional carrier polymers of such additives are not to be included in the calculation of the wt% amount of the multimodal polyethylene or LDPE but are regarded as part of the additive package present.

Viewed from another aspect the invention provides a process for manufacturing a film or sheet comprising:

(I) providing to an extruder (B) a polymer composition comprising at least 45 wt% of at least one multimodal polyethylene having a density of 905 to 945 kg/m$^3$;

0.1 to 15.0 wt% of foaming agent component; and
optionally 10 to 50 wt% of a low density polyethylene (LDPE);
wherein the weight percentages are based on the total amount (100wt%) of the polymer composition;

(II) providing a multimodal LLDPE (a) to an extruder (A);
co-extruding the polymer compositions in extruders (A) and (B) to form a multilayer film or sheet as hereinbefore defined.

Viewed from another aspect the invention provides the use of the multilayer film or sheet of the invention as a greenhouse film/sheet, e.g. as the roof and walls of a greenhouse, e.g. a polytunnel, or the use of the multilayer film or sheet of the invention in mulching.

Viewed from another aspect the invention provides an article comprising the multilayer film or sheet of the invention, wherein said multilayer film has a surface area of at least 10 $m^2$.

The invention also relates to a construction for agricultural use comprising a rigid framework for defining and retaining the shape of the construction and a covering on the framework and being supported by said framework, wherein said covering comprises the multilayer film of the invention.

The construction is typically a greenhouse, such as a polytunnel. In such a construction, it is preferred if the layer (A) side of the multilayer film is arranged to be the outer side of the greenhouse and hence faces towards a natural light source, such as a direct sunlight.

A greenhouse such as a polytunnel, thus comprises a frame, such as a semi-circular frame, on which the foamed film or sheet of the invention is applied to form a greenhouse, especially a polytunnel.

Viewed from another aspect the invention provides a multilayer film or sheet comprising at least a layer (A) and a layer (B);

wherein layer (A) is not foamed and comprises a multimodal linear low density polyethylene (a) having a density of 905 to 935 $kg/m^3$; and
wherein layer (B) is foamed and wherein the foamed layer (B) comprises at least 45 wt% of at least one multimodal polyethylene having a density of 905 to 945 $kg/m^3$ and optionally 10 to 50 wt% of a low density polyethylene (LDPE) based on the weight of foamed layer (B), said film having a plurality of apertures through which crops can grow in use.

Viewed from another aspect the invention provides a mulching system comprising a multilayer film or sheet of the invention secured to the ground and covering an area of soil in which crops have been planted;
said film or sheet being provided with a plurality of apertures through which said crops grow. Often the area of soil is a row of crops and the film covers the row of crops. Typically, a field comprises a plurality of such rows. Such a mulching system may further comprise a drip irrigation apparatus to supply water under the mulching film.

## Detailed Description of Invention

The present invention relates to the formation of a multilayer film or sheet comprising a non-foamed layer (A) and a foamed layer (B) and an article comprising such a film or sheet. Layer (B) of the multilayer film of the invention comprises a foamed multimodal polyethylene and optionally an LDPE. The term foamed film or sheet refers to a film or sheet in which at least one layer of the film is foamed. Films of the invention are preferably blown films, manufactured using conventional film blowing techniques.

A foamed layer of the multilayer film or sheet is produced in the presence of a foaming agent component in order to introduce gas into the extruded polymer melt and hence cells into the final foamed layer. Foamed layers will have a lower density than the corresponding unfoamed layer. The reduction in density is ideally at least 50 $kg/m^3$, such as at least 100 $kg/m^3$. This reduction in density may be measured on the foamed layer itself or on the foamed film as a whole.

Whilst the invention will be primarily described in relation to films, it will be appreciated that the preferred embodiments below also apply to the sheet aspects of the invention.

The films of the invention are "suitable for agricultural use". This means that the film can be used in any shape and size to cover a surface area e.g. of more than 10 $m^2$, even more than 100 $m^2$, e.g. in a form of a cover element, e.g. a wall and/or a roof material in a greenhouse, e.g. a polytunnel or as a mulching covering. The upper limit of film surface area is not critical and depends on the needed coverage. The term "agricultural use" include below the horticultural use as well, e.g. for growing flowers.

In mulching embodiments, the film can be used to suppress weeds and conserve water in crop production. The film is often applied to a field to cover an area of interest, typically an area where crops have been sown. The person skilled in the art will be familiar with a field containing rows of elevated soil (often semicircular in cross section) in which crops are sown and which are covered by a mulching film. Crops grow through slits or holes in the film. Plastic mulch is often used in conjunction with drip irrigation. The use of these films in large-scale crop growing, especially vegetable growth, is a further embodiment of the invention.

The film as a mulching film or as a greenhouse film is exposed to sunlight and weather conditions. In the greenhouse embodiment, sufficient light penetrates the film to allow the crops below to grow. In the mulching embodiment, the film suppresses weeds and keeps moisture under the film for crop growth. The film also allows light through and hence allows parts of the crop beneath the film to access light.

**Multimodal Polyethylene in the** (B) **layer**

The film or sheet of the invention comprise at least one multimodal polyethylene in the (B) layer. The term "multimodal" means, if otherwise not specified, multimodality with respect to molecular weight distribution and includes bimodal polymers.

Usually, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polyethylene, there is by definition a lower molecular weight component (LMW) and a higher molecular weight component (HMW). The LMW component has a lower molecular weight than the higher molecular weight. Typically the difference is at least 5000 g/mol. However, the difference in Mw is more easily observed through an analysis of the MFR of the components.

In a multimodal polyethylene of use in this invention at least one of the LMW and HMW components is a copolymer of ethylene. Preferably, at least HMW component is an ethylene copolymer. It is also possible for the lower molecular weight (LMW) component to be an ethylene copolymer. Alternatively, if one of the components is a homopolymer, then LMW is the preferably the homopolymer. The combination of a LMW homopolymer and HMW ethylene copolymer is especially preferred.

The multimodal polyethylene may comprise up to 5.0 % by weight of a well-known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other $C_{3-12}$ alpha olefin monomer. Ethylene obviously forms the major monomer unit present. Preferred copolymers are binary and comprise a single comonomer or are terpolymers and comprise two or three comonomers. Preferably, one comonomer is present in the multimodal polyethylene of the invention.

The multimodal polyethylene may have a density of 905 to 945 kg/m$^3$ such as 905 to 940 kg/m$^3$ In one embodiment, the multimodal polyethylene is a multimodal LLDPE (b). The multimodal LLDPE (b) may have a density of 905 to 930 kg/m$^3$, such as 915 to 930 kg/m$^3$, especially 918 to 928 kg/m$^3$.

In a second embodiment, the multimodal polyethylene is a multimodal medium density polyethylene (MDPE). The multimodal MDPE may have a density of 931 to 945 kg/m$^3$ such as 932 to 940 kg/m$^3$, especially 932 to 938 kg/m$^3$. It has been observed that the use of the multimodal MDPE has certain advantages in terms of the foaming properties of the polymer composition. Where a higher density MDPE is used, more foaming can occur and the density of the foamed layer or the foamed film as a whole is reduced. The increase in foaming also leads to an increase in haze. The use therefore of a multimodal MDPE is especially preferred.

In a further preferred embodiment, the (B) layer comprises a blend of multimodal polyethylenes, such as a blend of a multimodal LLDPE and a multimodal MDPE. If such a blend is used the weight ratio of multimodal LLDPE to multimodal MDPE may be 1:3 to 3:1 such as 1:2 to 2:1, preferably about 1:1. .

In one embodiment there may be at least 30 wt% of the multimodal MDPE and at least 30 wt% of the multimodal LLDPE in the (B) layer, such as at least 40 wt% of the multimodal MDPE and at least 40 wt% of the multimodal LLDPE.

The features of the multimodal polyethylene which follow apply to both multimodal MDPE and multimodal LLDPE (b) embodiments.

The melt flow rate, MFR$_2$ of the multimodal polyethylene (whether LLDPE or MDPE) is preferably in the range 0.01 to 20 g/10min, e.g. 0.05 to 10 g/10min, preferably 0.1 to 6.0 g/10min.

The MFR$_{21}$ of the multimodal polyethylene may be in the range 5 to 500, preferably 10 to 200 g/10min. The Mw of the multimodal polyethylene may be in the range 100,000 to 300,000, preferably 150,000 to 270,000.

It is an important feature that the multimodal polyethylene of the invention has a broad molecular weight distribution. This may be shown by the high MFR$_{21}$/MFR$_2$ value or a high Mw/Mn.

The $MFR_{21}/MFR_2$ of the multimodal polyethylene is preferably 50 to 200, such as 60 to 150, especially 70 to 120. This high value reflects the breadth of the molecular weight distribution.

The Mw/Mn of the multimodal polyethylene is preferably 10 or more, such as 10 to 50, especially the Mw/Mn of the polyethylene may be in the range 10 to 30, preferably 10 to 25. It is envisaged that the use of a broad molecular weight distribution multimodal polyethylene provides additional melt strength and stretchability during the foaming process so that a foamed film or sheet can be formed with a well dispersed cell structure of limited cell size and containing mainly closed cells.

The multimodal polyethylene may be formed from ethylene along with at least one $C_{3-12}$ alpha-olefin comonomer, e.g. 1-butene, 1-hexene or 1-octene. Preferably, the multimodal polyethylene is a binary copolymer, i.e. the polymer contains ethylene and one comonomer, or a terpolymer, i.e. the polymer contains ethylene and two or three comonomers. Preferably, the multimodal polyethylene comprises an ethylene hexene copolymer, ethylene octene copolymer or ethylene butene copolymer, especially an ethylene butene copolymer. The amount of comonomer present in the multimodal polyethylene is preferably 0.5 to 12 mol%, e.g. 2 to 10% mole, especially 4 to 8% mole. The comonomer content can be determined by quantitative 13C nuclear magnetic resonance (NMR) spectroscopy after basic assignment (J. Randall JMS - Rev. Macromol. Chem. Phys., C29(2&3), 201-317 (1989).

Alternatively, comonomer contents present in the multimodal polyethylene may be 1.5 to 10 wt%, especially 2 to 8 wt%.

As stated above a multimodal polyethylene comprises at least a LMW component and a HMW component.

The LMW component of the multimodal polyethylene preferably has a $MFR_2$ of at least 50, preferably 50 to 3000 g/10 min, more preferably 100 to 500 g/10 min. The molecular weight of the low molecular weight component should preferably range from 20,000 to 50,000, e.g. 25,000 to 40,000.

The density of the lower molecular weight component may range from 930 to 980 $kg/m^3$, e.g. 940 to 970 $kg/m^3$, more preferably 945 to 955 $kg/m^3$ in the case of copolymer and 940 to 975 $kg/m^3$, especially 960 to 972 $kg/m^3$ in the case of homopolymer.

The lower molecular weight component preferably forms 30 to 70 wt%, e.g. 40 to 60% by weight of the multimodal polyethylene with the higher molecular weight component forming 70 to 30 wt%, e.g. 40 to 60% by weight.

The higher molecular weight component has a lower $MFR_2$ and a lower density than the lower molecular weight component.

The higher molecular weight component has preferably an $MFR_2$ of less than 1.0 g/10 min, preferably less than 0.5 g/10 min, especially less than 0.2 g/10min. I may have a density of less than 915 $kg/m^3$, e.g. less than 910 $kg/m^3$, preferably less than 905 $kg/m^3$. The Mw of the higher molecular weight component may range from 100,000 to 1,000,000, preferably 250,000 to 500,000.

In any copolymeric HMW component, at least 0.25 mol-%, preferably at least 0.5 mol-%, e.g. at least 1-mol%, such as up to 10 mol-%, of repeat units derive from the comonomer. This value may be measured or calculated. Ethylene forms the majority of the HMW component.

It is preferred if the multimodal polyethylene of the invention is one manufactured using a Ziegler Natta catalyst. Multimodal polyethylene of use in the foamed articles, preferably films/sheets of the invention are not new and can be purchased from polyolefin suppliers such Borouge, Borealis, Exxon, Basell, Dow etc.

**LDPE**

The preferred (B) layer of the invention may also comprise a low density polyethylene (LDPE). The term low density polyethylene is a term of this art and defines a polyethylene polymer prepared in a high pressure process using typically a radical initiatior(s), like peroxide(s), as is well known in the art. LDPE polymers and MDPE/LLDPE polymers are not the same as is well known to the person skilled in this art.

The LDPE of use in the invention can be an LDPE copolymer or an LDPE homopolymer. Preferably, it is an LDPE homopolymer.

The LDPE preferably has a $MFR_2$ in the range 0.1-20 g/10 min, more preferably 0.3-10 g/10 min, still more preferably 0.5-5.0 g/10 min. The density of the LDPE is preferably 905-940 $kg/m^3$, more preferably 910 to 937 $kg/m^3$, e.g. 915 to 935 $kg/m^3$.

LDPEs of use in the invention are not new and can be purchased from polyolefin suppliers such as Borouge, Borealis, Exxon, Basell, Dow etc.

In one embodiment however, the foamed layer in the films of the invention comprises less than 8 wt% LDPE, e.g. is LDPE free..

In the (B) layer, the LDPE is an optional component. If present, there may be at least 10 wt%, such as 10 to 50 wt%, preferably 15 to 45 wt%, especially 18 to 42 wt% of the LDPE present in the (B) layer.

In the foamed layer (B) of the invention, there may be at least 45 wt%, such as at least 49 wt%, e.g. 50 to 99.9 wt%, preferably 50 to 99.0 wt%, such as 50 to 95 wt% of the multimodal polyethylene. In more preferred options there is at least 55 wt%, especially at least 57 wt% of the multimodal polyethylene.

Where LDPE is absent, the multimodal polyethylene preferably forms at least 90 wt%, such as at least 95 wt%, preferably at least 97 wt% of the polymer composition or of the foamed layer element, such a foamed layer of a film or sheet of the invention.

If a blend of two or more multimodal polyethylenes is used in the polymer composition or foamed film of the invention, the weight percentages above refer to the combined weight total of multimodal polyethylenes present.

**Multimodal Polyethylene in the (A) layer**

The (A) layer comprises at least one multimodal LLDPE (a). The multimodal LLDPE (a) has the same preferred features as multimodal LLDPE (b) described above in connection with the (B) layer. It is preferably made using a Ziegler Natta catalyst. The (A) layer preferably comprises at least 50 wt%, such as least 75 wt% of the multimodal LLDPE (a). In one embodiment, multimodal LLDPE (a) is the only polymer component present. The (A) layer can of course contain standard polymer additives as described herein. The (A) layer acts as a heat transmitting layer.

**Preparation of polymer**

The multimodal polyethylene can be a commercially available product or produced in a known manner according to or analogously to conventional polymerisation processes described in the literature of polymer chemistry.

Multimodal (e.g. bimodal) polymers can be made by mechanical blending two or more, separately prepared polymer components or, preferably, by *in-situ* blending in a multistage polymerisation process during the preparation process of the polymer components. Both mechanical and in-situ blending is well known in the field.

Accordingly, preferred multimodal polyethylene polymers, are prepared by in-situ blending in a multistage, i.e. two or more stage, polymerization or by the use of two or more different polymerization catalysts, including multi- or dual site catalysts, in a one stage polymerization.

Preferably the multimodal polyethylene is produced in at least two-stage polymerization using the same catalyst, e.g. a Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polyethylene is preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, $MFR_2$ etc of the higher molecular weight component using Kim McAuley's equations. Thus, both density and $MFR_2$ can be found using K. K. McAuley and J. F. McGregor: On-line Inference of Polymer Properties in an Industrial Polyethylene Reactor, AIChE Journal, June 1991, Vol. 37, No, 6, pages 825-835.

The multimodal polyethylene may be made using any conventional catalyst, such as a chromium, single site catalysts, including metallocenes and non-metallocenes as well known in the field. Preferably, a Ziegler-Natta catalyst is used.

Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

Conventional cocatalysts, supports/carriers, electron donors etc. can be used.

A LDPE may be prepared according to any conventional high pressure polymerisations (HP) process in a tubular or autoclave reactor using a free radical formation. Such HP processes are very well known in the field of polymer chemistry and described in the literature.

**Foaming Agent Component**

In order to prepare a foamed film or sheet, a foaming agent component is required. This component needs to be added to the polymers required in the (B) layer to prepare a polymer composition that can be foamed to prepare the (B) layer. The foaming agent can be a gas or a chemical that releases a gas during the extrusion process.

The advantages of the proposed polymer composition apply for all foaming technologies like, for example:

1) Physical foaming that converts the pellets into foamed films or sheets using a gas;

2) Chemical foaming that converts the pellets into foamed film or sheet using a chemical that will release a gas.

In one embodiment therefore the foaming agent is simply a gas, typically an inert gas, that is added into the composition before extrusion. The foaming agent (or blowing agent) is preferably chemical and in solid or liquid form, preferably solid form. It is added to the polymer composition prior to the extrusion process. It will be appreciated that such a foaming agent decomposes to release gas that will dissolve inside the melted polymer and expand at the exit of the die, when the pressure drops. In the final foamed film therefore, the foaming agent is no longer present (other than potential degradation products, carrier etc). However, before the foamed film or sheet is produced, a polymer composition exists which comprises multimodal polyethylene, optional LDPE and the foaming agent component and this forms a further aspect of the invention.

Viewed from another aspect the invention provides a polymer composition comprising at least 45 wt% of at least one multimodal polyethylene preferably having an $MFR_{21}/MFR_2$ of 50 to 200 and/or an Mw/Mn of at least 10, optionally 10 to 50 wt% of an LDPE and 0.1 to 15 wt% of foaming agent component based on the total amount (100wt%) of the polymer composition. Optional additives may also be present in an amount of 0 to 10 wt%.

The preferred percentages of multimodal polyethylene and LDPE content also apply to this embodiment of the invention.

The term foaming agent component will be used herein to define the supplied form of the foaming agent including components on which the foaming agent itself may be carried. In particular, the foaming agent component may be in the form of a masterbatch and may be carried on a carrier, such as a polymeric carrier. As previously noted, if the carrier is a polymer then the polymer carrier is not counted towards the weight percentage of polymers in the polymer composition (multimodal polyethylene/LDPE) but is deemed part of the foaming agent component. Moreover, the foaming agent itself could form 100% of the foaming agent component but typically, it may form 10 to 70 wt%, such as 15 to 50 wt% of the foaming agent component. The foaming agent component is typically purchased from suppliers. The datasheet will normally indicate the actual foaming agent content within the foaming agent component.

Appropriate chemical foaming agents can be any known organic or inorganic compounds that decompose at elevated temperatures releasing gases such as air, nitrogen, carbon dioxide, carbon monoxide or other hydrocarbons. Suitable organic foaming agents that may be utilized in this invention include sulfonylhydrazide, 5-phenyltetrazole, azodicarbonamide, citric acid and modified azocarbonamide, e.g. azodicarbonamide modified with zinc oxide, calcium carbonate or the like as known in the art.

Suitable inorganic foaming agents include sodium borohydride, ammonium carbonate, sodium bicarbonate, and modified sodium bicarbonate, i.e., sodium bicarbonate modified with a proton donor such as citric acid. Further options as foaming agents of particular interest are azodicarbonamides and sodium bicarbonate foaming agents such as modified azodicarbonamide and modified sodium bicarbonate. Most preferred inorganic foaming agents include sodium borohydride, ammonium carbonate, sodium bicarbonate, and modified sodium bicarbonate, i.e. sodium bicarbonate modified with a proton donor such as citric acid. Where a product comprises a modifying agent, e.g. to encourage gas release during foaming, the modifying agent is considered a part of the foaming agent.

The polymer composition may comprise 0.2 to 15.0 wt%, especially 0.5 to 10.0 wt%, such as 1.0 to 5.0 wt%, especially 1.0 to 3.0 wt% of the foaming agent component. The weight percentage of the multimodal polyethylene and/or LDPE component in the polymer composition can be adjusted down to accommodate these percentages.

The decomposition products of the foaming agent component that form the gaseous phase or gaseous cells of the foamed film include air, nitrogen, carbon dioxide, carbon monoxide and other hydrocarbons. Azodicarbonamides generate primarily nitrogen gas into the melt; modified bicarbonates generate primarily carbon dioxide gas into the melt. Ultimately, these gases expire after extrusion and are replaced by air within the film.

**Multimodal Films and** sheets

It is preferred if films or sheets of the invention comprise at least 2 layers, such as at least 3 layers, e.g. 3 or 5 layers.

A multilayer film or sheet of the invention comprises at least two layers:

(i) non-foamed layer (A); and
(ii) foamed layer (B).

A particularly preferred multilayer film or sheet comprises at least three layers (e.g. 3 layers) in the following order:

(i) non-foamed layer (A),
(ii) foamed layer (B) and
(iii) layer (C).

In a three layer construction, it is preferred if layers A and C are outer layers and layer B is a core layer. The composition of layer (A) and the composition of layer (C) can be same or different. It is preferred if the (A) layer is an outer layer and hence faces the sunlight in operation.

It is preferred if layer (C) is not foamed.

Layer (C) preferably comprises at least one multimodal LLDPE (a), especially one made using a Ziegler Natta catalyst. This can be the same or different to that used in layer (A).

It is preferred if layers (A) and (C) comprise a multimodal LLDPE. In particular, the multimodal polyethylene in layers (A) and/or (C) may be the LLDPE as used in the (B) layer of the invention.

Alternatively, the (A) and/or (C) layers can comprise a composition of the (B) layer but without foaming agent component.

(A) and/or (C) layers may therefore contain at least 45 wt% of a multimodal LLDPE and optionally 10 to 50 wt% of an LDPE.

Another option is an (A) and/or (C) layer comprising a blend of LLDPEs, e.g. a multimodal LLDPE (a) and a unimodal LLDPE.

It is preferred however if the (A) layer comprises at least 80 wt% of a multimodal LLDPE (a). This ensures that the (A) layer offers good mechanical, surface, and heat transmission properties.

In a most preferred embodiment, layer (A) and (C) if present, consist of a multimodal LLDPE (a) as herein before defined, i.e. in one embodiment, the (A) layer consists of a multimodal LLDPE and optional conventional additive components.

Thus, viewed from another aspect the invention provides a multilayer film comprising a layer (A) and a layer (B);

wherein layer (A) is not foamed and consists of a multimodal polyethylene of density 905 to 930 kg/m3 and optional conventional additives; and
layer (B) is foamed and comprises at least 45 wt% of a multimodal polyethylene of density 905 to 945 kg/m3 and optionally 10 to 50 wt% LDPE or
layer (B) is foamed and comprises at least 95 wt% of a multimodal polyethylene of density 905 to 945 kg/m3.

In a multilayer film, one layer is foamed as defined herein. It is possible to foam some or all of the other layers however that is not preferred. Preferably, only one layer is foamed, especially the core layer in the 3 layer construction. It is preferred therefore if other layers are not foamed.

Any film layer may "consist of" the defined polyolefins, i.e. consists of the optional LDPE and the multimodal polyethylene(s). The term "consists of" used in relation to film layer materials is meant to exclude only the presence of other polyolefin components. Thus, said term does not exclude the presence of additives. Some of these additives may be masterbatches and hence carried on a polymeric carrier. Such masterbatches are not excluded.

Any film or sheet or any polymer composition may contain standard additives such as antioxidants, UV stabilisers, acid scavengers, nucleating agents, anti-blocking agents, slip agents etc as well as polymer processing agent (PPA). In one embodiment, talc is absent in any foamed layer or polymer composition of the invention.

The films or sheets of the invention may incorporate one or more barrier layers as is known in the art. For certain applications for example, it may be necessary to incorporate a barrier layer, i.e. a layer which is impermeable to gas and moisture, into the film structure. This can be achieved using conventional lamination techniques or by coextrusion.

Films of the invention may incorporate an ethylene vinyl acetate layer.

In films or sheets comprising, preferably consisting of, layers (A), (B) and (C), layer (A) preferably forms 10 to 35 % of the thickness of the film, layer (B) forms 30 to 80 % of the thickness of the film and layer (C) preferably forms 10 to 35 % of the thickness of the film. In such films the layers (A) and, if present, (C) may be of equal thickness. Thus the film thickness distribution (%) of a ABC layer is preferably 10-35%/30-80%/10-35% of the total film thickness (100%) before or after foaming.

The films/sheets of the invention exhibit remarkable properties.

In a film or sheet of the invention the final density of the foamed multilayer film or sheet is 500 to 800 kg/m$^3$. In a further embodiment, the final density of the foamed layer in the multilayer film or sheet is 500 to 800 kg/m$^3$.

In the foamed layer of the invention the length of the cells are preferably 30 to 1500 microns, preferably 50 to 1200 microns, preferably 100 to 800 microns. The ratio length/width of the cells can fluctuate between 1 and 10, and can be partially adjusted by the processing parameters like speed and blow up ratio. Preferred ratios of length/width would be between 1.5 and 5.

The thickness of the cells will not exceed the thickness of the foamed layer and will be generally lower than the 2 other dimensions. The 3 dimensions of the cells will, in average, mainly depend on the composition of the foamed layer, including the selected foaming agent itself, and the processing conditions.

Any film or sheet of the invention may have a thickness of 5 to 1000 $\mu$m, such as 6 to 500 $\mu$m. Depending on the intended use of the film or sheet, different thicknesses of film or sheet may be appropriate. For mulching films or sheets a preferred thickness is 5 to 15 $\mu$m, preferably 6 to 12 $\mu$m, more preferably 6 to 10 $\mu$m, especially 6 to 8 $\mu$m.

For other films or sheets of the invention such as greenhouse films, suitable thicknesses are preferably 50 to 300 $\mu$m, especially 80 to 200 $\mu$m, e.g. 100 to 200 $\mu$m. In such films or sheets, any foamed layer within such a film or sheet may have a thickness of 80 to 500, for film preferably 50 to 150 $\mu$m.

The foamed layer of said film or sheet is preferably foamed by at least 10wt%, such as at least 12 wt%. Maximum foaming may be 50 wt%, such as 20 to 45 wt%. Foam percentage is determined by comparing the foamed density to the prefoamed density of the blend.

Foamed films or sheets of the invention may have a haze of at least 90%, such as at least 92%.

Light transmission is preferably at least 80 %. In particular, films of haze 90% or more and a thickness of 100 to 200 $\mu$m are preferred.

**Film/sheet preparation**

For film or sheet formation, the different polymer components (e.g. within layers (A), (B) and optional (C)) are typically intimately mixed prior to extrusion and as is well known in the art. It is especially preferred to thoroughly blend the components, for example using a twin screw extruder, preferably a counter-rotating extruder prior to extrusion.

As to the first step of the preparation process, the layered structure of the film/sheet of the invention may be prepared by any conventional formation process including extrusion procedures. Films can be prepared by cast film or blown film processes.

The polymer composition required can be prepared by conventional mixing and the foaming agent component added. This can be passed to an extruder. The extruder melts the composition to the proper viscosity so that it can absorb the gas generated by the foaming agent. The extruder also intimately mixes all components and maintains the composition under sufficient pressure so that the gas produced by decomposition of the foaming agent remains in solution in the mixture until the mixture is extruded.

Although the gas released by the foaming agent will plasticize the melt, the general extrusion parameters of the foamed composition will not change relative to a standard non-foamed composition. Therefore, suitable pressures for the extrusion process range from about 30 bar to about 300 bar. Suitable temperatures for the extrusion process range from about 170° C. to about 230° C.

Particularly preferably the multilayer film of layers (A), (B) and optionally (C) are formed by blown film extrusion, more preferably by blown film coextrusion processes. Typically, the compositions providing layers (A), (B) and optionally (C) will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

Typically, the composition required for each layer of the multilayer film is supplied to an extruder and a co-extrusion occurs to form the multilayer film of the invention. Such techniques are well known in the art. Film or sheets of the invention may be prepared from either flat die extrusion or blown film extrusion.

The foamed films/sheets of the invention can be used for greenhouse applications such as in polytunnels. A polytunnel is variously known as a polyhouse, hoop greenhouse, hoophouse, grow tunnel or high tunnel. Typically, a metal or wooden frame is used to support the foamed multilayer film of the invention. The frame defines an area under which crops can be grown protected by the film.

The frame often defines a semi-circular tunnel with the walls and roof of the tunnel being formed by the foamed film carried on the frame. It will be appreciated that more sophisticated frames may not define a simple semi-circular tunnel but may define a larger structure akin to a greenhouse. The films of the invention can be applied to such a structure as well.

Whilst smaller polytunnels might have open ends, more complex structures could have doors. The skilled person will be familiar with the design of these agricultural structures.

These structures will be called greenhouses, a particular form thereof being a polytunnel. A greenhouse, e.g. polytunnel is any structure in which the foamed film of the invention is carried on a frame and is used to diffuse light to enable the growth of crops underneath the film.

Films of the invention may also be used in mulching. The films may be used to cover growing crops as described above. **In** mulching the film is secured to the ground and covers an area of soil in which crops are planted. Apertures are made in the film through which the crops grow. Again, an agricultural worker is familiar with these types of films. Mulching films are most commonly used to grow vegetables and fruit such as strawberries, lettuce, broccoli although more recently it is envisaged that non-food crops such as tobacco and cotton can be grown using mulching films.

Mulching occurs when the film is placed over the ground. Apertures are made in the film at regular intervals for seeds to be planted in, or the film might be placed over crops in the beginning stages of growth. The films remain in place for the duration of the cultivation (usually 2-4 months). The main functions of the mulch are to insulate and maintain a consistent temperature and humidity of the soil, preventing evaporation of moisture from the soil, minimization of seedtime and harvest, prevent weed growth, and to prevent erosion.

Some mulching films are black. These prevent weed growth, but do not transmit light to heat up the soil. The present invention concerns films that transmit light and heat the soil, but still reduce weed growth. Mulching in particular, improves irrigation requirements and may reduce flowering time.

A mulching system of the invention may further comprise a drip irrigation apparatus to supply water under the mulching film. This may take the form of a pipe with a plurality of apertures under the mulching film which is connected to a remote water supply. As water cannot penetrate the mulching film, a drip irrigation or other irrigation apparatus is important for use in conjunction with the mulching film to maximise yields.

The invention will now be described with reference to the following non limiting examples.

## Determination Methods

### Melt Flow Rate

The melt flow rate (MFR) is determined according to ASTM D1238 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load. $MFR_{21/2}$ is the ratio of $MFR_{21}$ / $MFR_2$. This is also called $FRR_{21/2}$.

### Density

Density of the polymer was measured according to ISO 1183-1:2004 Method A on compression moulded specimen prepared according to EN ISO 1872-2 (February 2007) and is given in $kg/m^3$.

The foamed percentage is obtained from the division of the density on foamed film by the density on un-foamed film.

*Foaming ratio(%): $(d_i - d_f)/d_i$ x 100 (expresses weight density reduction ) where $d_i$ is initial density and $d_f$ is foamed density.*

To determine foamed density, a piece of film is cut along the width of the reel.

The film is folded in order to stack 12 layers of equal size.

A series of 12 disks is cut at once through the 12 layers, so that we have 12 different disks along the width of the film. Diameter of the disk is 24.9 mm.

Among the 12 disks, 4 best ones are selected, generally in the middle of the stack.

Multiplying the diameter with the measured thickness of each disks provides the volume of each 4 disks.

Each disk is weighed and the volumic mass of each disk is the division of the weight (gr) by the volume (cm3).

Dividing the volumic mass of each disk by the volumic mass of water (1gr/cm3), we get the density of each disk.

The density of the sample is defined by the average of the densities of the 4 disks.

### Molecular weight

$M_w$, $M_n$ and MWD are measured by Gel Permeation Chromatography (GPC) according to the following method: The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a polymer composition can be calculated if the molecular weights of its components are known according to:

$$Mw_b = \sum_i w_i \cdot Mw_i$$

where $Mw_b$ is the weight average molecular weight of the polymer composition,

$w_i$ is the weight fraction of component "i" in the polymer composition and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the number average molecular weight of the polymer composition,

$w_i$ is the weight fraction of component "i" in the polymer composition
$Mn_i$ is the number average molecular weight of the component "i".

Haze is measured according to ASTMD1003
Gloss is measured according to ISO2813.
Transmittance is measured by an internal method using a light meter.

## Examples

The following materials are used in the examples:

A commercial multimodal butene LLDPE copolymer (grade FB2230 supplied by Borouge) of density 923 kg/m$^3$ and Melt Flow Rate $MFR_2$ of 0.25 g/10min, a $MFR_{21/2}$ of 88, with an Mw/Mn of 16 (LLDPE-1).
A commercial multimodal MDPE copolymer (Grade FB1350 supplied by Borouge; of density 935 kg/m$^3$ and $MFR_2$ of 0.15g/10min, $MFR_{21}$ of 15 g/10min, $MFR_{21/2}$ of 100. (MDPE-1).
A commercial LDPE polymer of density 923 kg/m$^3$ and $MFR_2$ of 2.0 g/10min (LDPE-1) (grade FT6230 supplied by Borealis AG).
Clariant Hydrocerol CT3232 as foaming agent (supplied by Clariant as a masterbatch with carrier LDPE): Active ingredient 20 wt% of the MB.

## Methods

A 3 layer ABA film was prepared with layer distribution 25/50/25 (before foaming). LLDPE-1 was used alone in both of the A layers. The B layer comprises LLDPE-1/MDPE-1/LDPE-1 as explained in table 1. All parameters are kept the same to visualize the effect of CT3232 on the film.
Guangdong Jinming 3 Layer Co-extrusion Blown Film line:

Extruder: $\varphi$45mm / $\varphi$55mm / $\varphi$45mm
Screw: L/D: 30: 1; Separation & Barrier type;
Die diameter: 180mm;
Die Gap: 1.8mm;
Machine Width: 800mm

BUR: 2: 1;
Bubble laydown width 575mm;
Output: 55Kg/H with line speed 8m/min.
Outer layer: Extruder. A (°C): 190 to 200;
Core layer: Extruder. B (°C): 185 to 210;
Inner layer: Extruder. C (°C): 190 to 200.

**Multilayer film**

For IE2, a blend of 77.5 wt% by weight of LLDPE-1, 20% by weight of LDPE-1 and 2.5 wt% by weight of a foaming agent component CT3232 (and hence 0.4 wt% of foaming agent) was prepared. The mixture was introduced into the extruder B. LLDPE-1 was supplied to extruders A and C. The melt including the dissolved gas was pulled from the die into the cooling tower by nip rollers. Concurrently, air was blown inside the film column to form a bubble. Other examples are prepared following the same protocol.

Table 1: Film Recipes: 3 layer Co-extrusion Film structure (Outer layer / Core layer / Inner Layer with thickness ratio: 1:2:1 (prefoaming):

| Example | Layer A | Layer B | Layer C |
|---|---|---|---|
| C1 | LLDPE-1 | LLDPE-1 (no foaming agent component) | LLDPE-1 |
| IE1 | LLDPE-1 | 97.5% LLDPE-1+ 2.5%CT3232 | LLDPE-1 |
| IE2 | LLDPE-1 | 77.5% LLDPE-1+ 20%LDPE-1 + 2.5%CT3232 | LLDPE-1 |
| IE3 | LLDPE-1 | 57.5% LLDPE-1+ 40% LDPE-1+ 2.5%CT3232 | LLDPE-1 |
| IE4 | LLDPE-1 | 48.75% LLDPE-1+ 48.75% MDPE-1+ 2.5%CT3232 | LLDPE-1 |
| IE5 | LLDPE-1 | 97.5% MDPE-1 + 2.5%CT3232 | LLDPE-1 |
| IE6 | LLDPE-1 | 57.5% MDPE-1 + 40% LDPE-1+ 2.5%CT3232 | LLDPE-1 |

Results are presented in table 2:

| Film | Unit | C1 | IE 1 | IE2 | IE3 | IE4 | IE5 | IE6 |
|---|---|---|---|---|---|---|---|---|
| Thickness | $\mu$ | 99 | 137 | 125 | 124 | 150 | 166 | 139 |
| Film density ($d_i$) | Kg/m3 | 0.923 | 0.923 | 0.923 | 0.923 | 0.929 | 0.935 | 0.93 |
| Final density ($d_f$) | Kg/m3 | 0.923 | 0.644 | 0.702 | 0.708 | 0.548 | 0.552 | 0.64 |
| Foaming | % | 0 | 30 | 24 | 23 | 41 | 41 | 31 |
| Gloss at 60° | % | 7.4 | 7.0 | 7.8 | 8.3 | 6.7 | 6.5 | 8.2 |
| Haze | % | 87 | 95.6 | 92.9 | 93.1 | 97.8 | 98.4 | 95.5 |
| Transmittance | % | 90.5 | 85.4 | 86.3 | 85.4 | 83.2 | 83.3 | 84.7 |

**Conclusions**

From above table 2, we can see the film haze is increased to more than 92.5% after foaming, so the light will be further scattered by this foamed greenhouse film compared to unfoamed film C1. Under the same process conditions, the higher density bimodal polyethylene MDPE-1 foamed more (IE5) and higher haze films are generated. Due to the air bubbles inside the foamed layer of the greenhouse film, the heat stability is further improved. This is achieved without any significant loss is transmittance.

EMBODIMENTS

A. A multilayer film or sheet comprising a layer (A) and a layer (B);

wherein layer (A) is not foamed and comprises at least one multimodal linear low density polyethylene having a density of 905 to 935 kg/m$^3$; and

wherein layer (B) is foamed and wherein the foamed layer (B) comprises at least 45 wt% of at least one multimodal polyethylene having a density of 905 to 945 kg/m$^3$ and optionally 10 to 50 wt% of a low density polyethylene (LDPE).

B. A multilayer film or sheet as recited in embodiment A wherein the final density of the multilayer film or sheet is 500 to 800 kg/m$^3$.

C. A multilayer film or sheet as recited in embodiments A or B wherein the foamed layer is foamed by 20 to 50 wt%.

D. A multilayer film or sheet as recited in any of embodiments A-C wherein the multimodal polyethylene of layer (B) is a multimodal linear low density polyethylene (LLDPE) and has a density of 915 to 930 kg/m$^3$ or is a multimodal medium density polyethylene (MDPE) and has a density of 931 to 945 kg/m$^3$ or a mixture thereof.

E. A multilayer film or sheet as recited in any of embodiments A-D wherein the multimodal polyethylene has an $MFR_2$ of 0.01 to 20 g/10min.

F. A multilayer film or sheet as recited in embodiments A-E wherein the multimodal polyethylene has an Mw/Mn of 10 or more such as 10 to 30.

G. A multilayer film or sheet as recited in embodiments A-F wherein the LDPE has a $MFR_2$ of 0.1-20 g/10 min and has a density of 915 to 935 kg/m3.

H. A multilayer film or sheet as recited in embodiments A-G wherein the LDPE is absent.

I. A multilayer film or sheet as recited in embodiments A-H wherein the multimodal polyethylene has an $MFR_{21}$ of 10 to 200 g/10min.

J. A multilayer film as recited in embodiments A-I wherein layer (B) comprises 50 to 90 wt% of at least one multimodal polyethylene and 10 to 50 wt% of LDPE or wherein layer (B) comprises at least 95 wt% of at least one multimodal polyethylene and is free of LDPE.

K. A multilayer film as recited in embodiment A wherein layer (A) consists of multimodal LLDPE and optional polymer additives.

L. A multilayer film or sheet as recited in embodiments A-K having a thickness of 5 to 1000 μm preferably 6 to 500 μm.

M. A multilayer film or sheet as recited in embodiment L having a haze of at least 90% and/or a light transmittance of at least 80%.

N. Use of a multilayer film or sheet as recited in embodiments A-L as an agricultural film/sheet such as a greenhouse film/sheet, e.g. as the roof and walls of a polytunnel or in mulching.

O. An article comprising the multilayer film of any preceding embodiment, wherein said multilayer film has a surface area of at least 10 m$^2$.

P. A construction for agricultural use comprising a rigid framework for defining and retaining the shape of the construction and a covering on the framework and being supported by said framework, wherein said covering comprises the multilayer film according to any preceding embodiment A-O.

Q. The construction of embodiment P, which is a greenhouse e.g. a polytunnel, preferably wherein the layer (A) side of the multilayer film in said coverage is arranged to be the outer side of the greenhouse facing towards a natural light source, such as a direct sunlight.

R. A greenhouse, such as polytunnel comprising a multilayer film as recited in any of embodiments A-M.

S. A mulching system comprising a multilayer film or sheet as recited in any of embodiments A-M secured to the ground and covering an area of soil in which crops have been planted;
said film or sheet being provided with a plurality of apertures through which said crops grow.

T. A polymer composition comprising at least 45 wt% of at least one multimodal polyethylene having a density of 905 to 945 kg/m$^3$, optionally 10 to 50 wt% of a low density polyethylene (LDPE) and 0.1 to 15.0 wt% of foaming agent component based on the total amount (100wt%) of the polymer composition.

U. A polymer composition as recited in any preceding embodiment wherein the multimodal polyethylene is a multimodal LLDPE and has a density of 915 to 935 kg/m$^3$ or is a multimodal medium density polyethylene (MDPE) and has a density of 931 to 945 kg/m$^3$ or a mixture thereof.

V. A polymer composition as recited in embodiment T or U wherein the foaming agent component comprises sodium borohydride, ammonium carbonate, sodium bicarbonate, and modified sodium bicarbonate, e.g. sodium bicarbonate modified with a proton donor such as citric acid.

## Claims

1. A multilayer film or sheet having a surface area of at least 10 m$^2$, comprising a layer (A) and a layer (B);

   wherein layer (A) is not foamed and comprises at least one multimodal linear low density polyethylene having a density of 905 to 935 kg/m$^3$; and
   wherein layer (B) is foamed and wherein the foamed layer (B) comprises at least 45 wt% of at least one multimodal polyethylene having a density of 905 to 945 kg/m$^3$ and optionally 10 to 50 wt% of a low density polyethylene (LDPE).

2. A multilayer film or sheet as claimed in claim 1 wherein the final density of the multilayer film or sheet is 500 to 800 kg/m$^3$.

3. A multilayer film or sheet as claimed in claim 1 or 2 wherein the foamed layer is foamed by 20 to 50 wt%.

4. A multilayer film or sheet as claimed in claim 1 to 3 wherein the multimodal polyethylene of layer (B) is a multimodal linear low density polyethylene (LLDPE) and has a density of 915 to 930 kg/m$^3$ or is a multimodal medium density polyethylene (MDPE) and has a density of 931 to 945 kg/m$^3$ or a mixture thereof.

5. A multilayer film or sheet as claimed in claim 1 to 4 wherein the multimodal polyethylene of layer (B) has an MFR$_2$ of 0.01 to 20 g/10min and/or an MFR$_{21}$ of 10 to 200 g/10min.

6. A multilayer film or sheet as claimed in claim 1 to 5 wherein the multimodal polyethylene of layer (B) has an Mw/Mn of 10 or more such as 10 to 30.

7. A multilayer film or sheet as claimed in claim 1 to 6 wherein the LDPE has a MFR$_2$ of 0.1-20 g/10 min and has a density of 915 to 935 kg/m$^3$.

8. A multilayer film or sheet as claimed in claim 1 to 6 wherein the LDPE is absent, preferably wherein layer (B) comprises at least 95 wt% of at least one multimodal polyethylene and is free of LDPE.

9. A multilayer film or sheet as claimed in claim 1 to 7 wherein layer (B) comprises 50 to 90 wt% of at least one multimodal polyethylene and 10 to 50 wt% of LDPE.

10. A multilayer film or sheet as claimed in claim 1 to 9 wherein layer (A) consists of multimodal LLDPE and optional polymer additives.

11. A multilayer film or sheet as claimed in claim 1 to 10 having one or more of:

    a thickness of 5 to 1000 $\mu$m, preferably 6 to 500 $\mu$m;
    a haze of at least 90%; and
    a light transmittance of at least 80%.

12. A multilayer film or sheet as claimed in claim 1 to 11, wherein the multilayer film or sheet has a plurality of apertures through which crops can grow in use.

13. Use of a multilayer film or sheet as claimed in claim 1 to 12 as an agricultural film/sheet such as a greenhouse film/sheet, e.g. as the roof and walls of a polytunnel or in mulching.

14. A construction for agricultural use comprising a rigid framework for defining and retaining the shape of the construction and a covering on the framework and being supported by said framework, wherein said covering comprises the multilayer film or sheet according to any of claims 1-11; preferably wherein the construction is a greenhouse e.g. a polytunnel; more preferably wherein the layer (A) side of the multilayer film or sheet in said covering is arranged to be the outer side of the greenhouse facing towards a natural light source, such as a direct sunlight.

15. A greenhouse, such as polytunnel, comprising a multilayer film or sheet as claimed in claim 1 to 11.

16. A mulching system comprising a multilayer film or sheet as claimed in any of claims 1 to 12 secured to the ground and covering an area of soil in which crops have been planted;
said film or sheet being provided with a plurality of apertures through which said crops grow.

17. A polymer composition comprising

   at least 45 wt% of at least one multimodal polyethylene being:

   (i) a multimodal medium density polyethylene (MDPE) having a density of 931 to 945 $kg/m^3$, or
   (ii) a blend of a multimodal medium density polyethylene (MDPE) having a density of 931 to 945 $kg/m^3$ and a multimodal linear low density polyethylene (LLDPE) having a density of 915 to 930 $kg/m^3$;

   0.1 to 15.0 wt% of foaming agent component; and
   optionally 10 to 50 wt% of a low density polyethylene (LDPE),
   based on the total amount (100wt%) of the polymer composition.

18. A polymer composition as claimed in claim 17 wherein the foaming agent component comprises sodium borohydride, ammonium carbonate, sodium bicarbonate, or modified sodium bicarbonate, e.g. sodium bicarbonate modified with a proton donor such as citric acid.

Europäisches
Patentamt

European
Patent Office

Office européen
des brevets

## EUROPEAN SEARCH REPORT

**Application Number**

EP 25 16 0742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/137804 A1 (VAN DER VEN EMANUEL JOSEPH HERMAN MARIE [NL] ET AL) 19 May 2016 (2016-05-19) * paragraph [0022] * * paragraph [0037] * * paragraphs [0058] - [0064]; example 1 * * paragraph [0056] * * claims 1-10 * ----- | 1-18 | INV. B32B3/26 B32B5/26 B32B5/32 B32B27/06 B32B27/08 B32B27/32 A01G9/14 |
| | | | TECHNICAL FIELDS SEARCHED (IPC) |
| | | | B32B A01G |

The present search report has been drawn up for all claims

| Place of search | Date of completion of the search | Examiner |
|---|---|---|
| The Hague | 26 June 2025 | Weiss, Felix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 0742

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | Publication date | Patent family member(s) | | Publication date |
|---|---|---|---|---|
| US 2016137804 A1 | 19-05-2016 | CN | 105308104 A | 03-02-2016 |
| | | EP | 3010964 A1 | 27-04-2016 |
| | | JP | 6488288 B2 | 20-03-2019 |
| | | JP | 2016532727 A | 20-10-2016 |
| | | US | 2016137804 A1 | 19-05-2016 |
| | | WO | 2014202605 A1 | 24-12-2014 |

EPO FORM P0459

For more details about this annex : see Official Journal of the European Patent Office, No. 12/82

**REFERENCES CITED IN THE DESCRIPTION**

**Patent documents cited in the description**

- WO 2008104370 A
- WO 9535323 A
- WO 0155230 A
- WO 2004000933 A
- EP 810235 A
- WO 9951646 A

**Non-patent literature cited in the description**

- **J. RANDALL JMS**. *Rev. Macromol. Chem. Phys.*, 1989, vol. C29 (2,3), 201-317
- **K. K. MCAULEY** ; **J. F. MCGREGOR**. On-line Inference of Polymer Properties in an Industrial Polyethylene Reactor. *AIChE Journal*, June 1991, vol. 37 (6), 825-835